# EUROPEAN PATENT APPLICATION

(11) **EP 1 779 738 A1**
(43) Date of publication of application: **02.05.2007**
(21) Application number: 06255179.1
(22) Date of filing: 07.10.2006
(51) Int. Cl.: A23N 15/12, B26D 1/00

(54) **Snipper knife**

(30) Priority: 01.11.2005 US 264565
(71) Applicant: Lyco Manufacturing, Inc., Columbus, WI 53925 (US)
(72) Inventor: Zittel, David R., Columbus WI 53915 (US); Stousland, Glenn W., Beaver Dam WI 53925 (US)
(74) Representative: Every, David Aidan

(57) **Abstract**

A knife for a snipping apparatus includes a knife body having two side edges and a top edge, wherein the two side edges define cutting edges angularly disposed on the knife body. The knife body is formed of a non-metallic material.

## Description

### BACKGROUND

The present invention relates to a snipping apparatus for processing elongated vegetable products, such as beans and the like, and in particular, a snipper knife for removing an end portion of a vegetable.

Snipping apparatus are used to remove the ends from beans prior to canning or other packaging of the beans. A widely used system includes a frame and a rotating drum structure with a mass of beans moving from one end of the drum to another end. The periphery of the drum is slotted, and the slots are sized and shaped to permit projection of one end of a bean through the slot while preventing the entire bean from falling through the slot. A plurality of metal snipper knives are mounted to engage the peripheral surface of the drum. As the drum rotates, the snipper knives cut the ends of the beans that protrude through the slots. Recently, some snipping apparatus have incorporated drums made of polycarbonate material. Metal snipper knives can cause wear and damage to the polycarbonate drums.

The snipper knives are mounted against the drum using a knife holder assembly. A plurality of mounting rods are attached to the apparatus frame, which extend along a length of the drum parallel to the peripheral surface. Each knife is attached to a resilient rod, which is attached to one of the mounting rods. In such knife holder assemblies, additional components are required to attach the resilient rod to the knife, which increases the cost of the knife holder assembly and time required for replacing snipper knives.

### SUMMARY

In one embodiment, the invention provides a knife for a snipping apparatus including a knife body having two side edges and a top edge, wherein the two side edges define cutting edges angularly disposed on the knife body. The knife body is formed of a non-metallic material.

In another embodiment, the invention provides a knife for a snipping apparatus. The knife includes a knife body having two side edges and a top edge, wherein the two side edges define cutting edges angularly disposed on the knife body. An attachment means is formed in a top surface of the knife body, the attachment means configured and adapted for receiving a rod. The attachment means includes a channel formed in the top surface of the knife body, the channel being substantially aligned with a longitudinal axis of the knife body and positioned proximate a corner between the two side edges, and a bore formed in the top surface of the knife body and aligned substantially parallel to the top edge of the knife body.

In another embodiment, the invention provides a knife assembly for a snipping apparatus. The knife assembly including an assembly holder configured and adapted for coupling to a mounting rod, flexible means having a first end coupled to the assembly holder and a second end, and a knife body having two side edges and a top edge. The two side edges define cutting edges angularly disposed on the knife body and the knife body is formed of a non-metallic material. Attachment means are formed in a top surface of the knife body, the attachment means configured and adapted for receiving the second end of the flexible means.

In yet another embodiment, the invention provides a snipping apparatus includes a frame having an inlet end and an outlet end, a rotatable drum mounted in the frame and having a slotted sidewall, and a plurality of mounting rods fixed relative to the frame and positioned adjacent the sidewall of the drum. The mounting rods extend between the inlet end and the outlet end and are aligned generally parallel to a longitudinal axis of the drum. The snipping apparatus also includes a plurality of resilient rods having a first end a first end coupled to one of the mounting rods and a second end. A plurality of snipper knives are each coupled to the second end of one of the resilient rods. Each snipper knife has at least one cutting edge and is formed of a non-metallic material. The cutting edge of the snipper knives engage the drum.

In still another embodiment, the invention provides an attachment system for use with a snipping apparatus, the attachment system for facilitating attachment of a knife to a knife assembly. The attachment system includes a body member having a top surface, a forward edge and a rearward edge. A channel is formed in the body member, the channel being aligned substantially perpendicular with the forward edge and positioned proximate the rearward edge. A bore is formed in the body member, the bore being aligned substantially parallel to the top edge of the knife body and positioned forward of the channel.

Other aspects of the invention will become apparent by consideration of the detailed description and accompanying drawings.

### BRIEF DESCRIPTION OF THE DRAWINGS

Fig. 1 is a side view of a bean snipping apparatus illustrating a snipper knife for use with the apparatus.

Fig. 2 is a top view of a snipper knife embodying the invention with an attached knife rod.

Fig. 3 is a top perspective view of the snipper knife shown in Fig. 2.

Fig. 4 is a bottom perspective view of the snipper knife shown in Fig. 2.

Fig. 5 is a top view of the snipper knife shown in Fig. 2.

Fig. 6 is a perspective view of another embodiment of a snipper knife for use with the snipping apparatus shown in Fig. 1.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

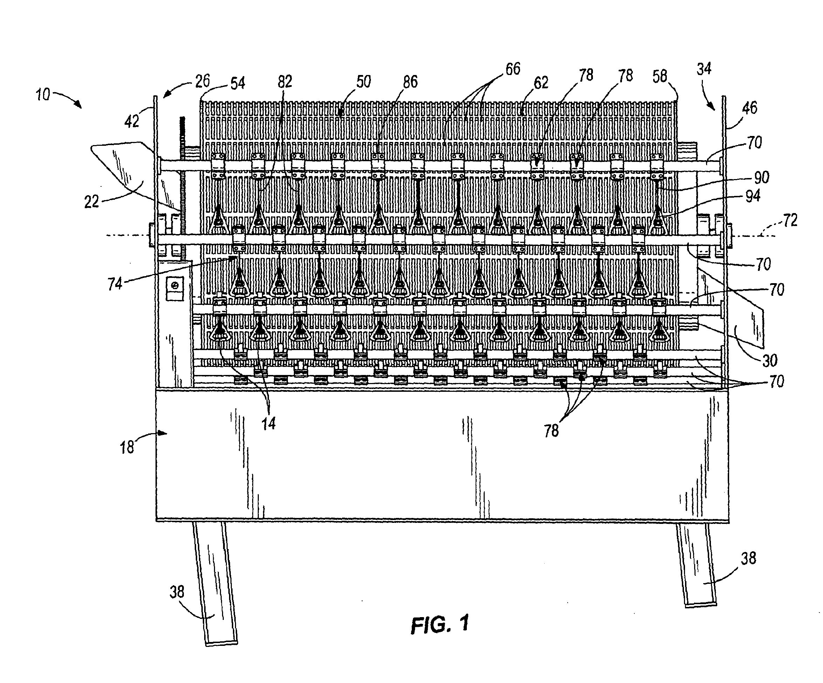

Fig. 1 illustrates a snipping apparatus 10 for processing elongated vegetable products, such as beans and the like, and removing an end portion of each bean. In particular, the snipping apparatus 10 includes a plurality of non-metallic snipper knives 14 for cutting the end portions of the beans.

The snipping apparatus 10 includes a frame 18 having an infeed chute 22 at an inlet end 26 and a discharge chute 30 at an outlet end 34. The frame 18 is supported by legs 38 that rest upon a support surface and space the frame 18 above the support surface. The inlet end 26 of the frame 18 includes an inlet end wall 42 that defines an opening (not shown) for receiving the infeed chute 22. Similar to the inlet end 26, the outlet end 34 of the frame 18 includes an outlet end wall 46 that defines an opening (not shown) for receiving the discharge chute 30. The frame 18 is preferably made of stainless steel or another suitable material for food processing applications.

A rotatable drum 50 is mounted in the frame 18 and is configured to transport beans received in the snipping apparatus 10 from the inlet end 26 to the outlet end 34 of the frame 18. Generally, the drum 50 is positioned at an incline relative to the support surface to permit the beans to travel from the inlet end 26 to the outlet end 34 of the apparatus 10. In the illustrated embodiment, the inlet end 26 of the frame 18 is spaced further from the support surface than the outlet end 34 of the frame 18 to create the inclined drum 50, i.e., the frame leg at the inlet end 26 of the frame 18 is taller than the frame leg at the outlet end 34.

The drum 50 includes an inlet end wall 54 proximate the inlet end wall 42 of the frame 18 and an outlet end wall 58 proximate the outlet end wall 46 of the frame 18. The infeed chute 22 communicates with an opening (not shown) in the inlet end wall 54 to deposit food product in the drum 50 and the discharge chute 30 communicates with an opening (not shown) in the outlet end wall 58 to receive food product from the drum 50. The drum 50 includes a generally cylindrical and perforate sidewall 62 that extends between the inlet end wall 54 and the outlet end wall 58. The sidewall 62 includes a plurality of elongated slots 66 that extend completely therethrough. The slots 66 are sized and configured to permit ends of the beans to pass through the slots 66 to the exterior of the drum 50, while preventing the entire bean from falling out of the drum 50 through the slots 66.

Although not shown in Fig. 1, it should be readily apparent to those of skill in the art that the drum 50 includes means for facilitating the transfer the beans from the inlet end 26 to the outlet end 34, such as baffles, partitions, or the like. Further, the snipping apparatus 10 may include a cover that mates with the frame 18 to substantially enclose the drum 50.

A plurality of mounting rods 70 are coupled to the frame 18 and extend between the inlet end wall 42 and the outlet end wall 46 of the frame 18. The mounting rods 70 are aligned generally parallel to a longitudinal axis 72 of the drum 50. The mounting rods 70 are arranged around the circumference of the drum 50 except an uppermost portion of the drum 50, although in a further embodiment, the mounting rods 70 may be arranged about the entire circumference of the drum 50 or other portions of the drum 50. In the illustrated embodiment, the mounting rods 70 are fixed relative to the frame 18, however, in another embodiment, the mounting rods 70 may be oscillated to thereby oscillate the snipper knives 14 back and forth relative to the drum 50.

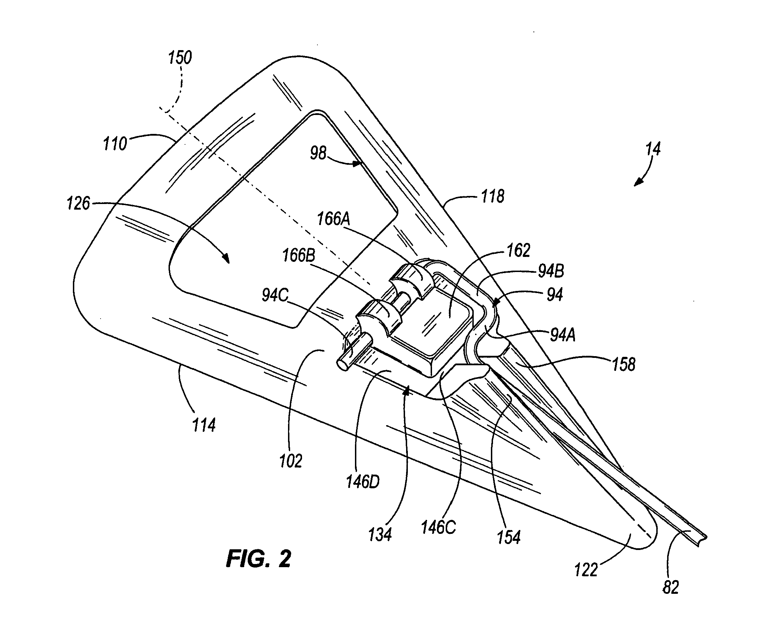

A plurality of knife holder assemblies 74 are attached to each mounting rod 70 and extend along the length of the drum 50. The knife holder assemblies 74 are spaced apart equidistantly. Each knife holder assembly 74 includes a clamp 78 (or assembly holder), a resilient rod 82, and a snipper knife 14. The clamp 78 is mounted to the mounting rod and includes a pair of plate members 86 that capture the mounting rod 70. The resilient rod 82 includes a first end 90 coupled to the clamp 78 and a second end 94 coupled to the snipper knife 14 (shown in Fig. 2). In the illustrated embodiment, the resilient rod 82 is formed by a semi-flexible metal rod that biases the snipper knife 14 against the drum 50 such that the snipper knife 14 engages the drum 50. In further embodiments, other resilient flexible means may be used to couple the snipper knives 14 to the clamps 78, such as a leaf spring.

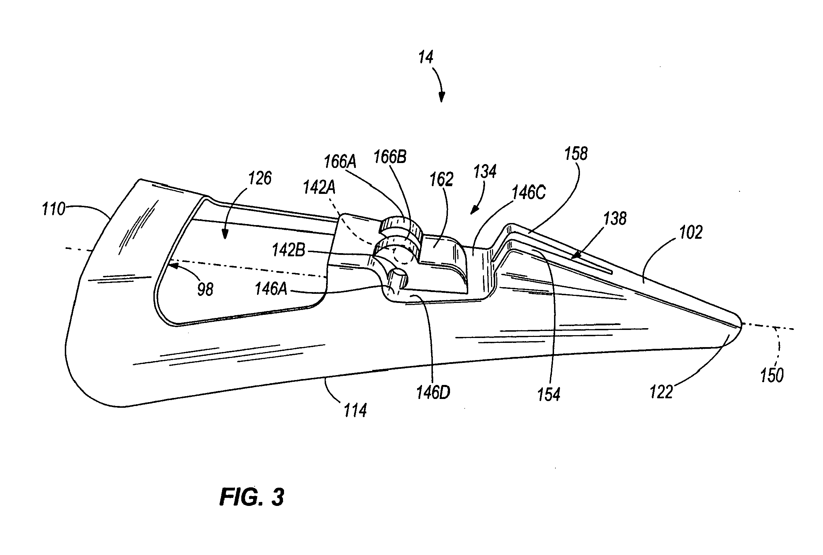

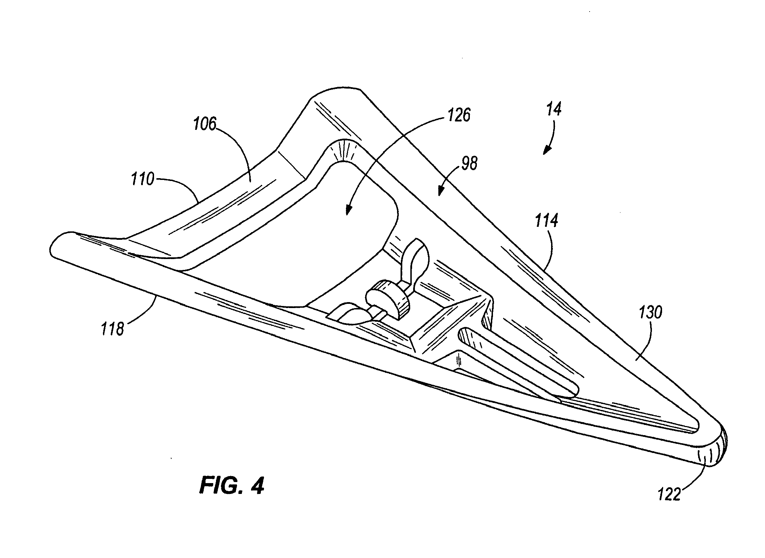

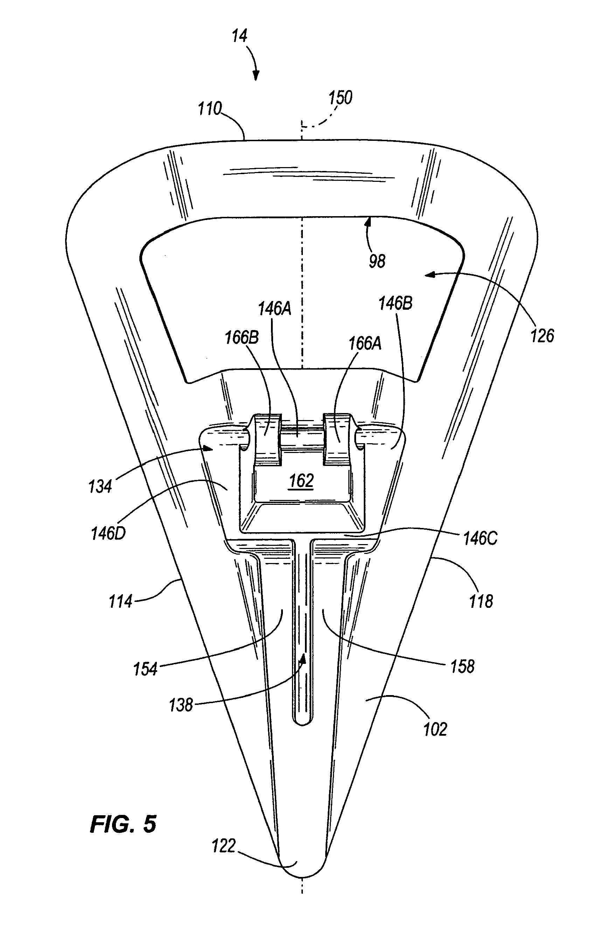

Figs. 2-5 illustrate the snipper knife 14 shown in Fig. 1. The snipper knife 14 includes a knife body 98 having a generally triangular shape. The knife body 98 has a top surface 102, a bottom surface 106, a top edge 110 and first and second side edges 114, 118. The first and second side edges 114, 118 extend from opposite ends of the top edge 110 and intersect at a bottom corner 122 of the knife body 98. The first and second side edges 114, 118 define cutting edges angularly disposed on the knife body 98. In the illustrated embodiment, a hollow portion 126 is formed in the knife body 98 and is positioned adjacent the top edge 110 between the two side edges 114, 118. The bottom surface 106 of the knife body 98 is generally concave such that a center portion 130 of the bottom surface 106 is recessed from the sidewall 62 of the drum 50 (Fig. 1), which reduces friction and wear between the snipper knife 14 and the drum 50.

An attachment system 134 is formed in the top surface 102 of the knife body 98 for attaching the resilient rod 82 to the snipper knife 14. The attachment system 134 includes a channel 138, a pair of bores 142A, and recess portions 146A-146D. The channel 138 is formed along a longitudinal axis 150 of the knife body 98 and extends from the bottom corner 122. Two sidewalls 154, 158 define the channel 138 and provide a friction fit for retaining a portion of the resilient rod 82 within the channel 138 (Fig. 2). In general, the longer the channel 138, the more secure an attachment between the resilient rod 82 and the snipper knife 14. The top surface 102 of the knife body 98 includes a central area 162 forward of the channel 138. The recessed portions 146A-146D surround all four sides of the central area. The top surface 102 includes a pair of arches 166A, 166B that extend over the forward most recessed portion 146A to define the pair of bores 142A, 142B.

As shown in Fig. 2, the second end 94 of the resilient rod 84 is substantially J-shaped. The main portion of the resilient rod 82 is received within the channel 138. A first section 94A and a second section 94B of the second end 94 are positioned within the rearward most recessed portion 146C and the first side recessed portions 146B, respectively, of the attachment system 134. A third section 94C of the second end 94, which defines a free end of the resilient rod 82, passes through the two bores 142A, 142B. The third section 94C has a length sufficient to prevent the resilient rod 82 from becoming detached from the snipper knife 14 during use.

In a further embodiment, the second end 94 of the resilient rod 82 may be reversed such that the second section 94B is positioned within the opposite side recessed portion 146B and the third section 94C passes through the two bores 142A, 142B in an opposite direction. In the illustrated embodiment, the attachment system 134 is integrally formed in the top surface 102 of the knife body 98, which in combination with the resilient rod 82 and the configuration of the attachment system 134 eliminates the need for additional components to secure the resilient rod 82 to the snipper knife 14. It should be readily apparent to those of skill in the art that other configurations of the attachment system integral with the top surface 102 of the knife body 98 may be used for securing the resilient rod 82 to the snipper knife 14.

In the illustrated embodiment, the snipper knife 14 is formed from a filled plastic material by injection molding. In a further embodiment, the snipper knife 14 may be formed from other non-metallic materials, including a ceramic material, plastics, polymers, a polyethylene terephthalate (PET) being 30% glass filled, a 30% nylon 6/6 material, or a 40% nylon 6/6 material. The snipper knife 14 may also be formed using other known fabrication methods, such as by machining a solid block, thermo-forming, vacuum-forming, casting, or other known means. Use of a non-metallic material to form the snipper knife 14 reduces the cost of the snipper knife 14 because of lower raw material costs, as well as lower fabrication costs as the knife 14 is no longer stamped and sharpened. Further, use of a non-metallic knife 14 results in less wear and damage to the drum 50 of the snipping apparatus 10. In some embodiments, the non-metallic material may increase the use life of the snipper knife 14. In another embodiment, some portions of the snipper knife 14 are formed from metallic material, such as stainless steel, while the rest of the knife 14 is formed from non-metallic material. For example, the cutting edges 114 and 118 are formed from stainless steel and the remainder of the knife body, including the attachment system 134 is formed from plastic.

In a preferred embodiment, the snipper knife 14 has a width of about 4.5 inches along the top edge 102, an overall length of about 6.5 inches, and a thickness of about 1 inch at a thickest portion of the knife body 90, generally where the attachment system 134 is located. Further, the knife body 98 generally forms an isosceles triangle. It should be readily apparent to those of skill in the art that the snipper knife 14 may be smaller or larger, or may have other triangular shapes or non-triangular shapes.

Prior to operation of the snipping apparatus 10, the knife holder assemblies 74 are mounted to the mounting rods 70 such that the snipper knives 14 are biased against the sidewall 62 of the drum 50. During operation, the drum 50 rotates to transfer beans from the inlet end 26 of the snipping apparatus 10 to the outlet end 34. End portions of the beans project through the slots 66 in the sidewall 62 of the drum 50. As the drum 50 rotates and the end portions pass the snipper knives 14, the cutting edges 114, 118 of the snipper knives 14 cut off the end portions of the beans.

When it is necessary to replace worn snipper knives 14, an operator detaches the snipper knife 14 from the resilient rod 82 by removing the rod 82 from the channel 138 of the attachment system 134 and sliding the third section 94C of the rod 82 out of the bores 142A, 142B. A new snipper knife 14 is then attached to the resilient rod 82 using the attachment system 134 by sliding the third section 94C of the rod 82 into the bores 142A, 142B and fitting the main portion of the rod 82 within the channel 138. The attachment system 134 does not include additional components to secure the snipper knife 14 to the resilient rod 82, nor does the resilient rod 82 need to be removed from the mounting rod 70 at the clamp to replace the snipper knife 14. Therefore, the present invention snipper knife 14 can be replaced more efficiently, an estimated five times faster, and is less costly to change out, as compared to prior art knives and knife holder assemblies.

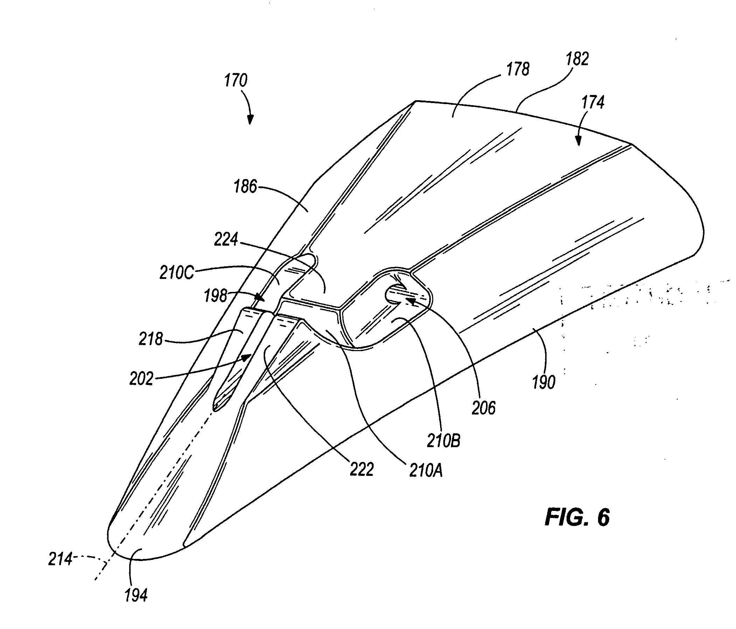

Fig. 6 illustrates another embodiment of a snipper knife for use with the snipping apparatus 10. A snipper knife 170 includes a knife body 174 having a generally triangular shape. The knife body 174 has a top surface 178, a concave bottom surface (not shown), a top edge 182 and first and second side edges 186, 190. The first and second side edges 186, 190 extend from opposite ends of the top edge 182 and intersect at a bottom corner 194 of the knife body 174. The first and second side edges 186, 190 define cutting edges angularly disposed on the knife body 174.

An attachment system 198 is formed in the top surface 078 of the knife body 174 for attaching the resilient rod (not shown) to the snipper knife 170. The attachment system 198 includes a channel 202, a bore 206, and recessed portions 210A- 210C. The channel 202 has an open top and is formed along a longitudinal axis 214 of the knife body 174. Two sidewalls 218, 222 define the channel 202 and provide a friction fit for retaining a portion of the resilient rod within the channel 202. In general, the longer the channel 202, the more secure an attachment with the resilient rod. The top surface 178 of the knife body 174 includes a central area 224 forward of the channel 202. The recessed portions 210A-210C surround three sides of the central area 224. The bore 206 is formed within the top surface 178 of the knife body 174 and along a fourth side of the central area 224. In the illustrated embodiment, the bore 206 is positioned between the central area 224 and the top edge 182 of the knife body 174, and is aligned generally perpendicular to the longitudinal axis 214 of the knife body 174. To attach the resilient rod to the snipper knife 170, the third section of the rod (Fig. 2) passes through the bore 206 of the attachment system 198 and the main portion of the rod (Fig. 2) is press fit within the channel 202. The first section and the second section of the rod are positioned within the rearward most recessed portion 210A and one of the side recessed portions 210B, 210C, respectively, of the attachment system 198.

In the illustrated embodiment, the attachment system 198 is integrally formed in the top surface 178 of the knife body 174, which in combination with the resilient rod and the configuration of the attachment system 198 eliminates the need for additional components to secure the resilient rod to the snipper knife 170. It should be readily apparent to those of skill in the art that other configurations of the attachment system integral with the top surface 178 of the knife body 174 may be used for securing the resilient rod to the snipper knife 170.

In the illustrated embodiment, the snipper knife 170 is formed from a filled plastic material by machining a solid block of material. In a further embodiment, the snipper knife 170 may be formed from other non-metallic materials, including, but not limited to, a ceramic material, plastics, polymers, a polyethylene terephthalate (PET) being 30% glass filled, a 30% nylon 6/6 material, or a 40% nylon 6/6 material. The snipper knife may also be formed using other known fabrication methods, such as injection molding, thermo-forming, vacuum forming, casting or other known means. In another embodiment, some portions of the snipper knife 170 are formed from metallic material, such as stainless steel, while the rest of the knife 170 is formed from non-metallic material. For example, the cutting edges 186 and 190 are formed from stainless steel and the remainder of the knife body, including the attachment system 198 is formed from plastic. The snipper knife 170 shown in Fig. 6 is more durable and heavier than presently used snipper, which includes the hollow portion 126. The heavier snipper knife has more inertia when snipping, and therefore is more gentle to the resilient rod and cuts the bean closer with less force on the rod.

Various features and advantages of the invention are set forth in the following claims.

## Claims

1. A knife for a snipping apparatus, the knife comprising:
a knife body having two side edges and a top edge, wherein the two side edges define cutting edges angularly disposed on the knife body, and further wherein the knife body is formed of a non-metallic material.

2. The knife of claim 1 wherein the knife body has a generally triangular shape.

3. The knife of claim 1 wherein a top surface of the knife body includes attachment means for attaching a rod to the knife body.

4. The knife of claim 3 wherein the attachment means includes a channel formed in the top surface of the knife body, the channel being substantially aligned with a longitudinal axis of the knife body and positioned proximate a corner between the side edges.

5. The knife of claim 3 wherein the attachment means includes at least one bore formed in the top surface of the knife body and aligned substantially parallel to the top edge of the knife body.

6. The knife of claim 5 wherein both ends of the bore are open.

7. The knife of claim 3 wherein the attachment means includes recessed portions of the top surface of the knife body, the recessed portions configured and adapted for receiving the rod.

8. The knife of claim 1 wherein the knife body is formed of a filled plastic.

9. The knife of claim 1 wherein the knife body is formed by injection molding.

10. The knife of claim 1 wherein the knife body includes a hollow portion positioned proximate the top edge and between the side edges.

11. A knife for a snipping apparatus, the knife comprising:
a knife body having two side edges and a top edge, wherein the two side edges define cutting edges angularly disposed on the knife body; and
attachment means formed in a top surface of the knife body, the attachment means configured and adapted for receiving a rod, wherein the attachment means comprises,
a channel formed in the top surface of the knife body, the channel being substantially aligned with a longitudinal axis of the knife body and positioned proximate a corner between the two side edges, and
a bore formed in the top surface of the knife body and aligned substantially parallel to the top edge of the knife body.

12. The knife of claim 11 wherein the knife body is formed of a non-metallic material.

13. The knife of claim 12 wherein the knife body is formed of a filled plastic.

14. The knife of claim 11 wherein the knife body is formed by injection molding.

15. The knife of claim 11 wherein the attachment means includes recessed portions of the top surface of the knife body, the recessed portions configured and adapted for receiving the rod.

16. The knife of claim 11 wherein the knife body includes a hollow portion positioned proximate the top edge and between the side edges.

17. A knife assembly for a snipping apparatus, the knife assembly comprising:
an assembly holder configured and adapted for coupling to a mounting rod;
flexible means having a first end coupled to the assembly holder and a second end;
a knife body having having two side edges and a top edge, wherein the two side edges define cutting edges angularly disposed on the knife body, and further wherein the knife body is formed of a non-metallic material; and
attachment means formed in a top surface of the knife body, the attachment means configured and adapted for receiving the second end of the flexible means.

18. The knife assembly of claim 17 wherein the knife body is formed of a filled plastic.

19. The knife assembly of claim 17 wherein the knife body includes a hollow portion positioned proximate the top edge and between the side edges.

20. The knife assembly of claim 17 wherein the knife body has a generally triangular shape.

21. The knife assembly of claim 17 wherein the attachment means comprises:
a channel formed in the top surface of the knife body, the channel being substantially aligned with a longitudinal axis of the knife body and positioned proximate a corner between the two side edges, wherein the channel receives a main portion of the flexible means; and
a bore formed in the top surface of the knife body and aligned substantially parallel to the top edge of the knife body, wherein the bore receives the second end of the flexible means.

22. The knife assembly of claim 21 wherein the attachment means includes recessed portions of the top surface of the knife body, the recessed portions configured and adapted for receiving the flexible means.

23. A snipping apparatus comprising:
a frame having an inlet end and an outlet end;
a rotatable drum mounted in the frame and having a slotted sidewall;
a plurality of mounting rods fixed relative to the frame and positioned adjacent the sidewall of the drum, the mounting rods extending between the inlet end and the outlet end and aligned generally parallel to a longitudinal axis of the drum;
a plurality of resilient rods having a first end coupled to one of the mounting rods and a second end;
a plurality of snipper knives are each coupled to the second end of one of the resilient rods, each snipper knife having at least one cutting edge and the snipper knife being formed of a non-metallic material, and further wherein the cutting edge of the snipper knives engage the drum.

24. The snipping apparatus of claim 23 wherein the snipper knifes are formed of a filled plastic.

25. The snipping apparatus of claim 23 wherein each snipper knife includes a hollow portion positioned proximate the top edge and between the side edges.

26. The snipping apparatus of claim 23, and further comprising attachment means formed in a top surface of each snipper knife, the attachment means configured and adapted for receiving the second end of one of the resilient rods.

27. The snipping assembly of claim 26 wherein the attachment means comprises:
a channel formed in the top surface of the snipper knife, the channel being substantially aligned with a longitudinal axis of the snipper knife and positioned proximate a corner between the two side edges, wherein the channel receives a main portion of one of the resilient rods; and
a bore formed in the top surface of the snipper knife and aligned substantially parallel to the top edge of the snipper knife, wherein the bore receives the second end of one of the resilient rods.

28. The snipping assembly of claim 27 wherein the attachment means includes recessed portions of the top surface of the snipper knife, the recessed portions configured and adapted for receiving one of the rods.

29. An attachment system for use with a snipping apparatus, the attachment system for facilitating attachment of a knife to a knife assembly, the attachment system comprising:
a body member having a top surface, a forward edge and a rearward edge;
a channel formed in the body member, the channel being aligned substantially perpendicular with the forward edge and positioned proximate the rearward edge; and
a bore formed in the body member, the bore being aligned substantially parallel to the top edge of the knife body and positioned forward of the channel.

30. The attachment system of claim 29 wherein the body member forms a portion of the knife.

31. The attachment system of claim 29, and further comprising a central member positioned between the channel and bore, and the body member including g recessed portions recessed from the top surface and surrounding a portion of the central member, the recessed portions extending between the channel and the bore.

32. The attachment system of claim 31, and further comprising a connecting member extending between the body member and the central member at least partially define the bore.

33. The attachment system of claim 29 wherein the body member is formed of a non-metallic material.

34. The attachment system of claim 33 wherein the body member is formed of a filled plastic.
